# EUROPEAN PATENT SPECIFICATION

(11) **EP 0 462 329 B1**
(45) Date of publication and mention of the grant of the patent: **13.03.1996**
(21) Application number: 90201615.3
(22) Date of filing: 19.06.1990
(51) Int. Cl.: H02G 3/04, H01R 25/16, H01R 25/00, H01R 13/453

(54) **Trunking system**
Leitungsführungssystem
Système de conduit

(43) Date of publication of application: 27.12.1991
(73) Proprietor: INOVAC SA, F-72140 Sille le Guillaume (FR)
(72) Inventor: Hodges, Kevin Neville, Frog Island, Leicester (GB); Drake, Christopher James Thomas, Frog Island, Leicester (GB)
(74) Representative: CABINET BONNET-THIRION

(56) References cited:
- EP-A- 0 389 382
- CA-A- 924 396
- DE-A- 1 590 494
- DE-A- 1 615 650
- DE-A- 2 264 216
- DE-U- 1 903 574
- GB-A- 583 935
- GB-A- 2 174 254
- US-A- 2 352 654

## Description

The present invention relates to a trunking system for installation in a building to enable services such as an electrical power supply or a telecommunications network to be distributed throughout the building or a room or rooms of the building. The invention is concerned more particularly with such a system having a plurality of socket outlets which provide access to the services.

Trunking systems are known already which embody socket outlets which can be positioned and repositioned within a room or building with minimal structural alteration. However, the known systems, once installed, are of fixed construction and cannot easily be modified.

EP-A-389 382 which claims priority of French patent application 89 03841 filed 24 March 1990 and was published on 26 September 1990 discloses a highly robust modular trunking system comprising base and capping parts. Assembly of such parts of a light weight alloy (namely a lightweight aluminium alloy) or other relatively rigid ("resistant") plastics material requires substantial forces for effecting snap-fitting of the component parts. To overcome this problem a long lever arm for increased mechanical advantage is employed enabling the use of relatively moderate manual forces. EP-A-389 382 teaches a separate and distinct cylindrical bead and complementary cylindrical socket respectively provided on first and second base parts for rocking one base part with respect to the other base art along an arcuate path to facilitate snap-fitting engagement. Such a dedicated pivotal connection is necessarily employed regardless of the material from which the base parts are made.

In DE GM 1 903 574 there is disclosed a trunking system comprising one or more channel-shaped base parts and a corresponding number of covers adapted to be received at the free ends of the channel-shaped members for defining service voids. When assembled there are two overlying channel sidewalls between successive service voids of the trunking. The service voids are defined by the respective base parts (each having a first and a second limb and inter-fitting means at the respective ends of the first limb and on the sidewall of the second limb) and capping parts. Each service void is delimited between the first and second limbs of the associated base part.

An object of the present invention is to provide a trunking system of modular design which uses a small number of basic parts and which permits easy modification both during and after installation.

In accordance with the broadest aspect of the present invention there is provided a modular trunking system comprising a plurality of inter-fitting parts including at least one base part and at least one capping part therefor, the at least one base part having plural integrally formed inter-fitting means for selectively inter-fitting with complementary inter-fitting means integrally formed respectively with the capping part and with another such base part, said at least one base part having an open transverse cross section for lateral access along the length of the base part, said at least one base part having a generally L-shaped cross-section with a first, backwall limb and second, transverse limb, said plural inter-fitting means being provided comprising first inter-fitting means at a free end of the first limb, third inter-fitting means at the other end of the first limb and second inter-fitting means at a free end of the second limb, respective base parts being inter-fittable by relative sliding movement or snap fitting and being devoid of pivotal connections with one another, such that a desired trunking configuration can be built up from a plurality of modules of base and capping parts, service voids being formed between respective base and capping parts when brought into inter-fitting relation and being delimited by second limbs of respective adjacent base parts.

In accordance with an embodiment of the invention, the first inter-fitting means is for selective inter-fitting with the third inter-fitting means integrally formed with the other base part, and the third inter-fitting means is for selective inter-fitting with the first inter-fitting means integrally formed with another adjacent base part.

In accordance with an embodiment of the invention, the second inter-fitting means at the free end of the second limb comprises two inter-fitting means, each of the last-mentioned inter-fitting means being for selective inter-fitting with respective capping parts capable of forming selective service voids with respective said base parts.

According to a preferred feature, the capping part is U-shaped and engages the second inter-fitting means of both the first base part and the other, adjacent base part.

Once a desired number of service voids has been built up, one or both ends of the ducting are conveniently closed by closure parts. At the upper end of the ducting the closure part engages with the first inter-fitting means of the final base part and the upper limb of its upper capping part. If desired, the closure part can itself form a void with a co-operating bevelled facia part. At the lower end of the ducting, the closure part engages with the third inter-fitting means of the first base part. Further, a bevelled facia part may interfit with both the lower closure part and the second inter-fitting means of the first base part. The lower closure part can form a further void at the bottom of the trunking system. The further voids may be of smaller cross-sectional area than the main void or voids of the trunking system.

The or each of the ducts carries a service such as a power supply cabling or telecommuncations cabling. Thus, in a situation where two voids are provided one may carry electrical power cables, socket outlets being provided in the or each capping part for access, the second void carrying telecommunications cabling accessible from data supply outlets provided in the capping part for that void.

In a preferred embodiment of the invention each of the component parts is extruded from plastics material. The parts may be slideable one relative to the other or, alternatively, some or all of the parts may be snap fitted one relative to the other.

The invention will now be described further by way of example with reference to the accompanying drawings in which:
- Figure 1A, Figure 1B and Figure 1C: are perspective views of trunking systems embodying the present invention and having a different number of voids,
- Figure 2: is an exploded perspective view of a multiple socket outlet module moulding for incorporation in the trunking system of the present invention,
- Figure 3: is a view similar to Figure 2 but having additional parts,
- Figure 4: is a view similar to Figures 2 and 3 with addititional parts and in a subsequent stage of assembly,
- Figure 5: shows the multiple socket outlet of Figures 2, 3 and 4 in a fully assembled condition ready for insertion into the trunking system of Figure 1,
- Figure 6: is a cross-sectional view of the multiple socket outlet shown in Figure 5, with a standard British 3-pin plug located therein,
- Figure 7: is a sectional view of a connector clip for use with the multiple socket outlet of Figure 5 showing its location within the trunking system of Figure 1, and
- Figure 8: is an exploded view of the connector clip shown in figure 7.

Figure 1A illustrates a modular trunking system in accordance with the present invention and having a plurality of voids arranged one above the other and each designed to carry a service to a room or building. Conveniently, the overall appearance of the trunking systen is that of a conventional skirting board thus enabling the system to be fitted in place of conventional skirting boards against the internal walls of an office for example.

The system includes a generally L-shaped base part 101 having first inter-fitting means 120 at the free end of its longer limb, second inter-fitting means 122 at the free end of its shorter limb and third inter-fitting means 124 at the juncture between its two limbs. An identical base part is provided above the first base part as may be seen for example in Figure 1A. Thus, the third inter-fitting means 124 of the upper L-shaped base part is engaged with the first inter-fitting means 120 of the first base part. This arrangement permits a generally U-shaped capping part 104 to engage the second inter-fitting means 122 of both the lower and upper base parts to form a service void 107.

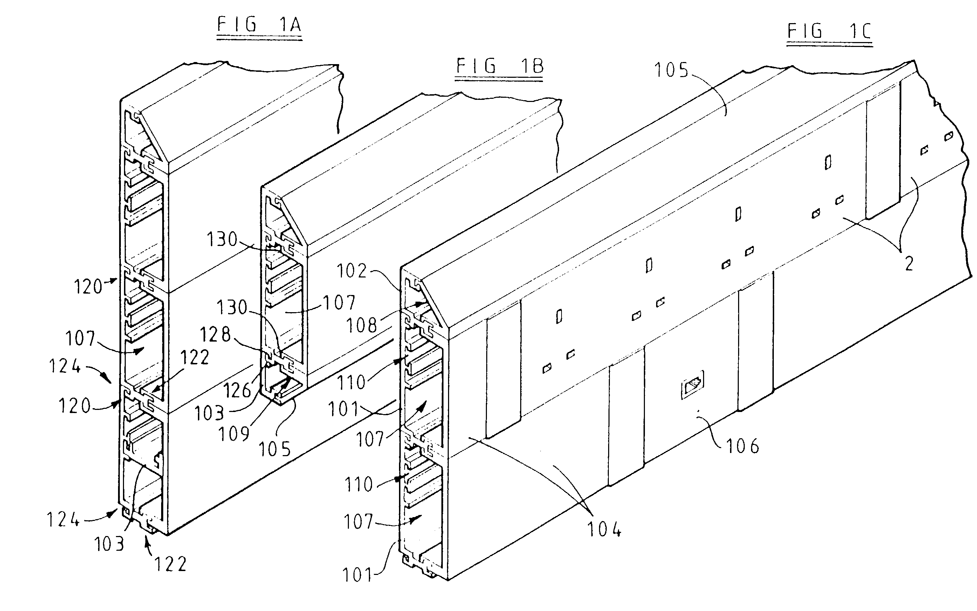

It will be appreciated that by fitting together in superimposed relationship a plurality of L-shaped base parts and capping pieces 104, a number of service voids can be arranged one above the other. Thus, in Figure 1B, there is one service void 107, in Figure 1C there are two service voids and in Figure 1A three.

If desired, a partitioning 103 may be provided within a service void 107 to sub-divide it into two service voids as may be seen in the lowermost void of Figure 1A. The inter-fitting means may be of any convenient design and may permit either sliding of the parts relative to one another or such as to enable snap fitting together. Essentially, on one part is a tongue 126 which is received in a complementary groove 128. The inter-fitting means 122 for the capping parts are slightly different inasmuchas a nose portion 130 is provided at each free end of the cap. Thus, when the cap is to be fitted the two noses 130 are slightly compressed so that they will pass between the corresponding tongues of the second inter-fitting means 122 so that when the noses 130 have passed over the tongues they expand again so that the noses 130 engage behind the tongues 126 thus preventing the capping part 104 from being removed from the ducting.

When a sufficient number of voids has been built up, one or both ends of the ducting are closed by closure parts. At the upper end of the ducting the closure part is designated 102 and engages with the first inter-fitting means of the uppermost base part 101 and the upper limb of its capping part. A bevelled facia part 105 is fitted to the closure part 102 in order to impart a skirting board like appearance to the upper side of the ducting and at the same time provide an upper generally triangular cross-sectional void 108 as may best be seen from Figure 1C.

The lower end of the void can be similarly finished by means of a closure part 103 which clips to the third inter-fitting means of the base part 101 as may best be seen from Figure 1B. A bevelled cover 105 clips onto the closure part 103 in order to provide the lower part of the composite ducting with an attractive appearance and also provide a lower generally triangular shaped void 109 which may also be used for carrying a mains service.

Once the ducting has been installed in an office for example, then as may be seen from Figure 1C which has two principal service voids 107, telecommunications cabling is provided in the lower void and mains power cabling in the upper void. To provide access to these services from the office a multiple socket outlet module is connected to the mains cabling and similarly a data supply outlet may be connected to the telecommunications cabling.

It will be appreciated that a major advantage of the trunking system of the present invention is that any number of the base component parts may be clipped together to form an indefinite number of voids to suit user requirements, these being secured to an office wall as may be convenient. Furthermore, the socket outlets will be visually integrated in a skirting board arrangement or dado rail arrangement and can be readily modified or added to should the requirement to do so arise later.

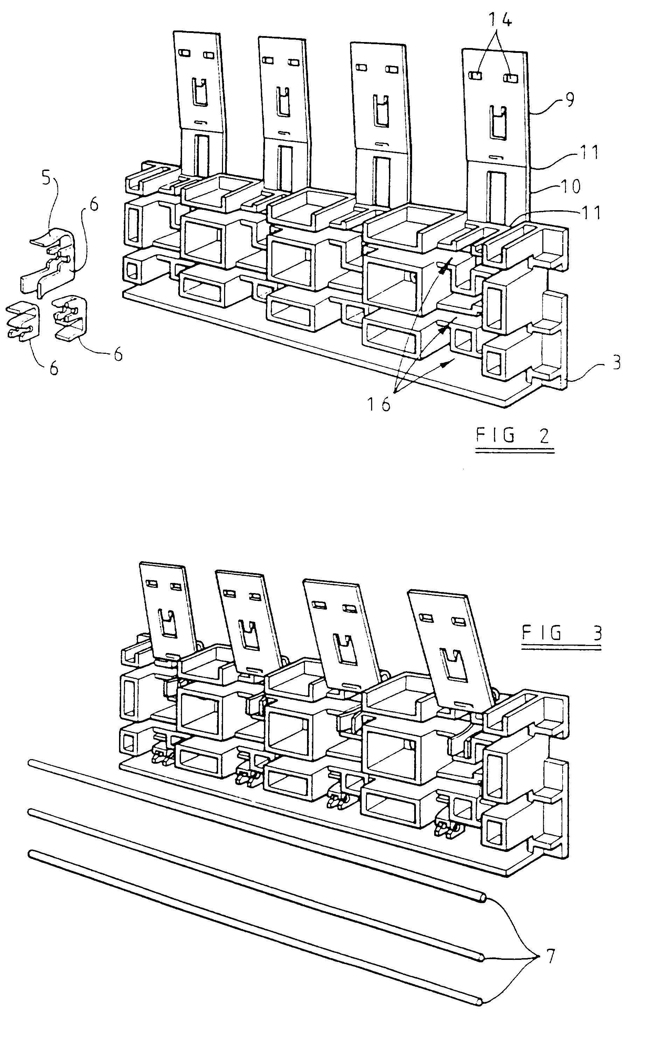

The ducting shown in Figure 1 is suitable for incorporating the modular power and communications management and supply system shown in Figures 2 to 6.

The electrically insulating parts of the multiple socket outlet module are made from an integrally moulded complex part illustrated in Figure 2. The moulded part can be shaped such that there are no re-entrant portions so permitting the part to be made by two moulds. The part is preferably moulded from a modified polycarbonate or nylon material which combines the necessary thermal stability with a degree of flexibility.

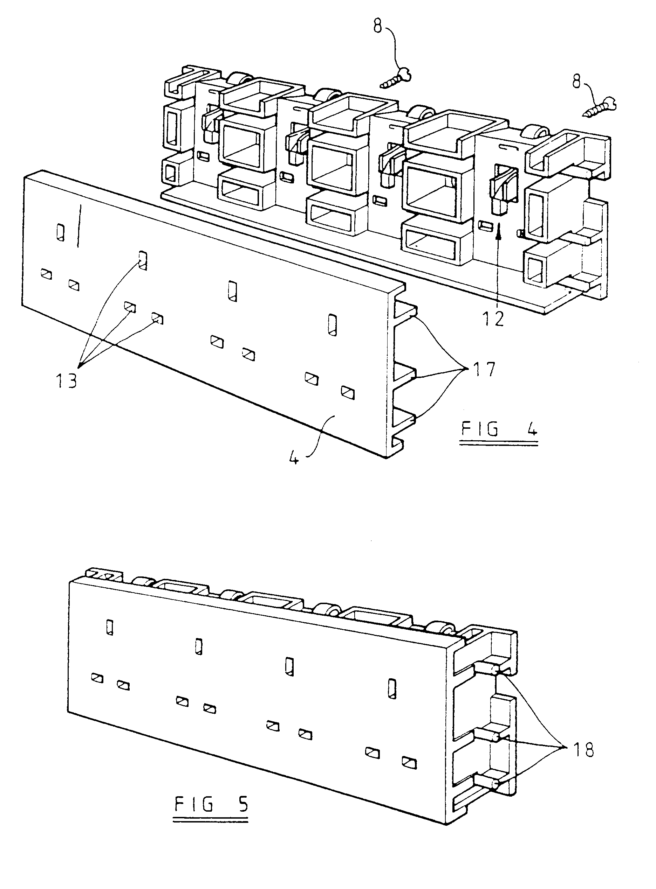

The moulded part includes a body 3 for receiving straight, round-sectioned busbars 7 and contact clips 6 for making electrical contact with pins of a conventional standard British three-pin plug. Shutter portions 9 have apertures for the plug pins 14 and are connected by a connection portion 10 and flexible integrally moulded hinge portions 11 with the body 3. The shutter portions 9 also include integrally moulded inclined portions 12 onto which the pins of plugs operate and can best be seen in Figure 4. A cover 4 has apertures 13 for the plug pins and is retained by screws 8 to positively accomodate the internal components.

The contact clip 6 for the earth pin of the plug is made of brass and has a bent-over tab forming a leaf spring 5 which fits in a slot 15 in the shutter portion 9 thus retaining it in the position best shown in Figure 4. The moulding is formed with a variety of recesses which have not been individually indicated in all cases and which may be changed in accordance with the optimum design of the moulded part. Recesses for three busbars 7 extend the full length of the module, being shown at 16, the recesses opening to the front of the body 3 to facilitate the full length insertion of the busbars 7. The body 3 is additionally recessed to receive the contact clips 6 which are located by frictional engagement with the assistance of the busbars 7, the body 3 and projections 17 on the inside of the cover 4. Appropriate recesses are also formed for the springing action of the earth contact clip 6 and for reducing the volume of plastics material used for the moulded body 3.

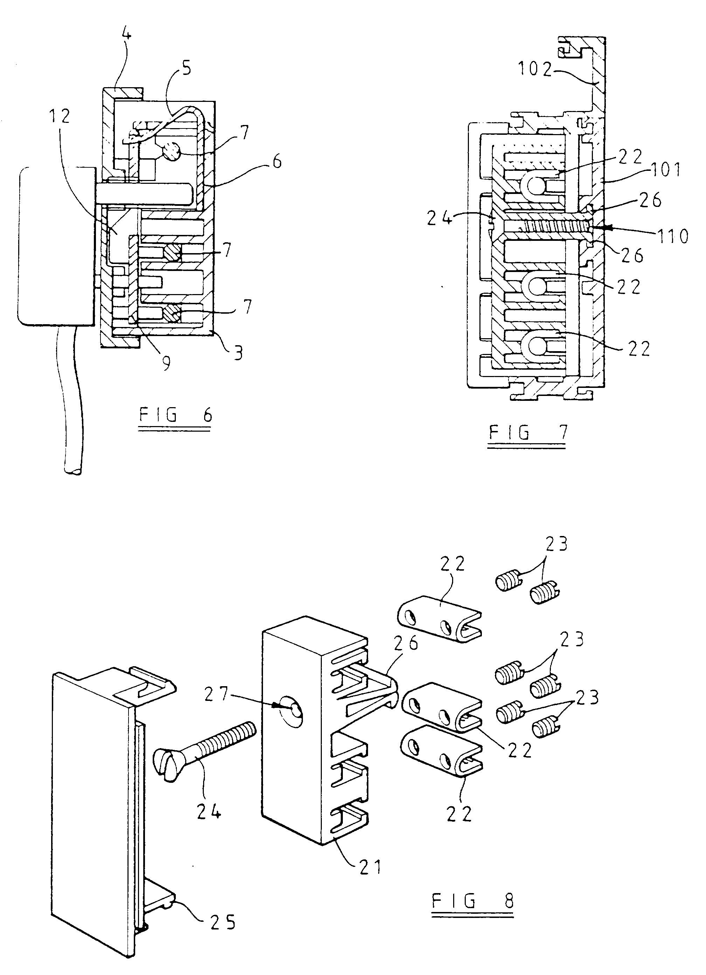

Figure 6 shows how the insertion of a three-pin plug has the effect of lowering the shutter portion 9 by the earth pin engaging with the inclined portion 12 which permits the power spins below to pass through the aligned pin apertures 13 and 14 so as to establish electrical contact. When no plug is inserted the earth contact clip 6 will spring the shutter portion 9 upwards so as to prevent access from outside through the pin apertures 13 to the lower contact clips 6. It can be seen that not only does the multiple socket module involve only a very small number of parts but also the assembly of the parts is extremely straightforward.

Figures 7 and 8 show that when the multiple mains socket outlet module 2 is inserted within a void 107 of the ducting system shown in Figure 1, it is retained securely by mechanically locking connector clips 20 which clip over the exposed ends of the busbars 18 found at either end of the multiple socket outlet module 2 (Figure 5) and protruding spreader clips 26 simultaneously engage the relevant retaining section 110 of the base part 101. The protruding spreader clips 26 are first expanded and then mechanically locked in situ by means of a screw 24.

The mechanically locking connector clip once fixed in position within a void 107 is covered with a cover clip 25 which is clipped for example to the second inter-fitting means 122 between consecutive multiple socket outlet modules and/or capping part profiles 104 (Figure 1) thus providing a secure and visually continuous system.

The body 21 of the mechanically locking connector clip is preferably moulded from a modified polycarbonate or nylon material which combines the necessary thermal stability with a degree of flexibility. It has protruding clips 26 (as previously described) which open outwards on insertion of the screw 24 through the hole 27 located in between the clips 26 and retaining recesses accommodate U-shaped brass or bronze clips 22 which frictionally engage the exposed busbar ends 18 found at either end of the multiple socket outlet module 2 (Figure 5). The U-shaped brass or bronze clips 22 are internally threaded to accomodate or receive two grub screws (per clip) which are used to maintain connection with electrical cable for supplying the multiple socket outlet modules 2.

By using the modular power and communications management and supply system shown a mains supply can be conveniently combined with a wide variety of data cablings such as are necessary for telephone, modems or computers, but at the same time the length of the busbars which have to be accomodated to provide a flexible layout is kept to a mimimum.

In modified versions of the invention, not specifically described, various parts which are connected by integrally moulded hinged portions can of course be made so that they fasten in some other way instead, although this will necessitate the separate moulding of parts. For example the shutter portion 9 may be produced as a separate item. It is also possible for the shutter portion 9 to be operated by using distinctly produced parts and using, separate springs and not necessarily the springing portion 5 of the earth clip 6.

## Claims

1. A modular trunking system comprising a plurality of inter-fitting parts including at least one base part (101) and at least one capping part (104) therefor, the at least one base part having plural integrally formed inter-fitting means (120, 122, 124) for selectively inter-fitting with complementary inter-fitting means integrally formed respectively with the capping part and with another such base part, said at least one base part having an open transverse cross section for lateral access along the length of the base part, said at least one base part having a generally L-shaped cross-section with a first, backwall limb and second, transverse limb, said plural inter-fitting means (120,122,124) comprising first interfitting means (120) at a free end of the first limb, third inter-fitting means (124) at the other end of the first limb and second inter-fitting means (122) at a free end of the second limb, respective base parts being inter-fittable by relative sliding movement or snap fitting and being devoid of pivotal connections with one another, such that a desired trunking configuration can be built up from a plurality of modules of base and capping parts, service voids (107) being formed between respective base and capping parts when brought into inter-fitting relation and being delimited by second limbs of respective adjacent base parts.

2. A modular trunking system according to claim 1 characterized in that the first inter-fitting means (120) is for selective inter-fitting with the third inter-fitting means integrally formed with the other base part, and the third inter-fitting means (124) is for selective inter-fitting with the first inter-fitting means integrally formed with another adjacent base part.

3. A modular trunking system according to claim 1 or 2 characterized in that said second inter-fitting means (122) comprises two inter-fitting means, each of the last-mentioned inter-fitting means being for selective inter-fitting with respective capping parts (104) capable of forming selective service voids (107) with respective said base parts (101).

4. A modular trunking system according to any one of claims 1 to 3, characterized in that the second limb is shorter than the first limb.

5. A modular trunking system according to any one of the preceding claims, characterized in that the base parts (101) when assembled define a base wall and limbs outwardly protruding therefrom.

6. A modular trunking system according to any one of the preceding claims, characterized in that the at least one capping part (104) has inter-fitting means inter-fitting with the second inter-fitting means (122) on adjacent base parts (101).

7. A modular trunking system according to claims 5 and 6 when taken together, characterized in that the outwardly projecting second limbs in cooperation with lateral flanges of the capping parts (104) define the partitions between service voids (107) of respective modules.

8. A modular trunking system according to any one of the preceding claims, characterized in that the at least one base part (101) is an extrusion, the third inter-fitting means (124) being located at the juncture of the first and second limbs.

9. A modular trunking system according to claim 8, characterized in that the capping part (104) is U-shaped and engages the second inter-fitting means (122) of both the at least one base part (101) and the other, adjacent base part (101).

10. A modular trunking system according to claim 9, wherein the services voids (107) are disposed one above another, characterized in that the trunking system further comprises a closure part (102) for closing an uppermost service void.

11. A modular trunking system according to claim 10, characterized in that the closure part (102) engages with the first inter-fitting means (120) of an uppermost base part and an upper inter-fitting means of an uppermost capping part.

12. A modular trunking system according to any one of claims 10 and 11, characterized in that the lower end of the trunking is closed off by a lower closure part which engages with the third inter-fitting means (124) of the lowermost base part.

13. A modular trunking system according to claim 12, characterized in that a further bevelled facia part (165) is provided for inter-fitting both with the lower closure part (102) and the second inter-fitting means (122) of the lowermost base part (101).

14. A modular trunking system according to any one of the claims 1 to 13, wherein a mains power supply or data supply socket outlet module (2) is accommodated in a service void, characterized by mechanically locking connector clips (20) for the socket outlet module and a cover part (4) located over the connector clips to form a visually continuous exterior surface with the outlet module.

15. A modular trunking system according to claim 14, characterized in that the base parts having retaining sections, the mechanically locking connector clips (20) have protruding clip members (26) which engage the retaining sections (110) of the base part (101) and lock in situ by means of screws cooperable with the clip members for securely engaging the clip members with the retaining sections and thereby locking the socket outlet module in position in the system.

16. A modular trunking system according to claim 14 or 15, characterized in that the at least one base part (101) includes a bevelled upper cover profile to provide a duct for accommodating mains and data cabling for a skirting board system.

17. A modular trunking system according to claim 16 characterized in that the base part (101) includes a bevelled upper cover profile and an extension profile which can also be used as a shelf within the voids, clips to the lower base part to allow a bevelled lower cover profile to be clipped to provide a duct for accommodating mains and data cabling for a dado rail system.

18. A modular trunking system according to any one of the claims 1 to 13, wherein a multiple socket outlet module (2) is inserted in a service void (107), the socket outlet module comprising a body (3), contacts mounted in the body and adapted to be connected to conductors extending through the service void, a cover (4) having pin apertures (13) for insertion of pins of plugs (14) to engage the contacts, resiliently biased shutter portions (9) having further pin apertures (14) and camming means for camming the shutter portions upon plug insertion to provide contact access, characterized in that connection portions (10) with integrally formed hinge means (11) connect the shutter portions to the body for movement of the shutter portions in response to plug insertion.

19. A modular trunking system according to claim 18, characterized in that the connection portions (10) comprise at one end one integral hinge (11) connected to the corresponding shutter portion and at an opposite end another integral hinge connected to the body (3).

20. A modular trunking system according to claim 18 or 19, characterized in that the connectors are busbars (7) extending through the body and the contacts are contact clips (6) connected to the busbars.

21. A modular trunking system according to any one of claims 18 to 20, characterized in that the shutter portions (10) are mounted for sliding movement.

22. A modular trunking system according to any one of claims 18 to 21, characterized in that said camming means comprises cam portions integrally formed with said shutter portions.

23. A modular trunking system according to any one of claims 1 to 13, wherein a multiple socket outlet module (2) is accommodated in a service void, the outlet module having a body through which busbars extend on which electrical contact clips are connected, and a cover having pin apertures to allow pins of plugs to engage the contact clips, characterized in that shutter portions having further pin apertures are mounted for movement under resilient bias exerted by a resilient leaf spring portion of an earth contact clip to bar clip access, and camming means to cam the shutter portions on plug insertion to provide contact clip access.

24. A modular trunking system according to claim 23, characterized in that the body has suitably configured open sided recesses for receiving the busbars (7).

25. A modular trunking system according to claim 24, characterized in that the busbars contact the clips (6) directly for assisting their location, the contact clips also acting to retain busbar and contact clip assembly.

26. A modular trunking system according to any one of claims 22 to 24, characterized in that the cover (4) has projections (17) locating the busbars in a closed condition.

27. A modular trunking system according to any one of claims 22 to 26, characterized in that it further comprises mechanically locking connector (20) clips having protruding clip portions (26) engageable with corresponding retaining sections (110) of base parts (101), and screw means (24) for locking the mechanically locking clips in situ to secure the module (2) in the system.

28. A modular trunking system according to claim 27, characterized in that the mechanically locking connector clips (20) each include U-shaped clips (22) for frictionally engaging exposed busbar ends.

29. A modular trunking system according to claim 27 or 28, characterized in that the mechanically locking connector clips (20) each include further U-shaped clips which are each internally threaded to accommodate or receive two screws (23) to maintain the connection between an electrical cable and the busbars.

30. A modular trunking system according to any one of claims 22 to 29, characterized in that a plurality of the modules disposed end-to-end are joined by means of separate busbars.

31. A modular trunking system according to any one of claims 22 to 30, characterized in that it further comprises cover clips (25) for covering the mechanically locking connector clips (20) to provide a visually continuous exterior surface.

## Patentansprüche

1. Modulares Leitungsführungssystem, das eine Mehrzahl von zusammenpassenden Teilen einschließlich mindestens einem Basisteil (101) und mindestens einem Abschlußteil (104) dafür umfaßt, wobei das mindestens eine Basisteil mehrere integral gebildete zusammenpassende Mittel (120, 122, 124) zum wahlweisen Zusammenfügen mit komplementären zusammenpassenden Mittel aufweist, welche jeweils integral an dem Abschlußteil und an einem anderen solchen Basisteil gebildet sind, wobei das mindestens eine Basisteil einen offenen Querschnitt für einen seitlichen Zugang entlang der Länge des Basisteils aufweist, wobei das mindestens eine Basisteil einen im allgemeinen L-förmigen Querschnitt mit einem ersten, rückwandigen Rand und einem zweiten, querverlaufenden Rand aufweist, wobei die mehreren zusammenpassenden Mittel (120, 122, 124) erste zusammenpassende Mittel (120) an einem freien Ende des ersten Rands, dritte zusammenpassende Mittel (124) an dem anderen Ende des ersten Rands und zweite zusammenpassende Mittel (122) an einem freien Ende des zweiten Rands umfassen, wobei die jeweiligen Basisteile durch eine relative Gleitbewegung oder eine Schnappassung zusammenfügbar sind und ohne jegliche schwenkbare Verbindungen untereinander auskommen, so daß eine gewünschte Leitungsführungskonfiguration aus einer Mehrzahl von Modulen aus Basis- und Abschlußteilen aufgebaut werden kann, wobei Dienstleerräume (107) zwischen den jeweiligen Basis- und Abschlußteilen gebildet werden, wenn diese in zusammengefügter Beziehung zueinander gebracht sind und durch zweite Ränder von jeweiligen benachbarten Basisteilen begrenzt werden.

2. Ein modulares Leitungsverbindungssystem nach Anspruch 1,
dadurch **gekennzeichnet**,
daß das erste zusammenpassende Mittel (120) zum wahlweisen Zusammenfügen mit dem dritten zusammenpassenden Mittel vorgesehen ist, welches integral an dem anderen Basisteil ausgebildet ist, und daß das dritte zusammenpassende Mittel (124) zum wahlweisen Zusammenfügen mit dem ersten zusammenpassenden Mittel vorgesehen ist, welches integral an einem anderen benachbarten Basisteil gebildet ist.

3. Modulares Leitungsführungssystem nach Anspruch 1 oder 2,
dadurch **gekennzeichnet**,
daß das zweite zusammenpassende Mittel (122) zwei zusammenpassende Mittel umfaßt, wobei jedes der zuletzt erwähnten zusammenpassenden Mittel zum wahlweisen Zusammenfügen mit entsprechenden Abschlußteilen (104) vorgesehen ist, die in der Lage sind, wahlweise Dienstleerräume (107) mit den jeweiligen Basisteilen (101) zu bilden.

4. Modulares Leitungsführungssystem nach einem der Ansprüche 1 bis 3,
dadurch **gekennzeichnet**,
daß der zweite Rand kürzer als der erste Rand ist.

5. Modulares Leitungsführungssystem nach einem der vorhergehenden Ansprüche,
dadurch **gekennzeichnet**,
daß die Basisteile (101) im zusammengebauten Zustand eine Basiswand und von dieser nach außen vorstehende Ränder definieren.

6. Modulares Leitungsführungssystem nach einem der vorhergehenden Ansprüche,
dadurch **gekennzeichnet**,
daß das mindestens eine Abschlußteil (104) ein zusammenpassendes Mittel aufweist, das mit dem zweiten zusammenpassenden Mittel (122) an benachbarten Basisteilen (101) zusammenpaßt.

7. Modulares Leitungsführungssystem nach den Ansprüchen 5 und 6 gemeinsam,
dadurch **gekennzeichnet**,
daß die nach außen hervorstehenden zweiten Ränder in Zusammenwirkung mit seitlichen Flanschen der Abschlußteile (104) die Unterteilungen zwischen Dienstleerräumen (107) von jeweiligen Modulen definieren.

8. Modulares Leitungsführungssystem nach einem der vorhergehenden Ansprüche,
dadurch **gekennzeichnet**,
daß das mindstens eine Basisteil (101) ein Preßprofil ist, und das dritte zusammenpassende Mittel (124) sich an der Verbindung der ersten und zweiten Ränder befindet.

9. Leitungsführungssystem nach Anspruch 8,
dadurch **gekennzeichnet**,
daß das Abschlußteil (104) U-förmig ist und mit dem zweiten zusammenpassenden Mittel (122) sowohl des mindestens einen Basisteils (101) als auch des anderen, benachbarten Basisteils (101) in Eingriff steht.

10. Modulares Leitungsführungssystem nach Anspruch 9, in dem die Dienstleerräume (107) übereinander angeordnet sind,
dadurch **gekennzeichnet**,
daß das Leitungsführungssystem ferner ein Verschlußteil (102) zum Abschluß eines obersten Dienstleerraums umfaßt.

11. Modulares Leitungsführungssystem nach Anspruch 10,
dadurch **gekennzeichnet**,
daß das Verschlußteil (102) mit dem ersten zusammenpassenden Mittel (120) eines obersten Basisteils und einem oberen zusammenpassenden Mittel eines oberen Abschlußteils in Eingriff steht.

12. Modulares Leitungsführungssystem nach einem der Ansprüche 10 und 11,
dadurch **gekennzeichnet**,
daß das untere Ende der Leitungsführung durch ein unteres Verschlußteil abgeschlossen ist, das mit dem dritten zusammenpassenden Mittel (124) des untersten Basisteils in Eingriff steht.

13. Modulares Leitungsführungssystem nach Anspruch 12,
dadurch **gekennzeichnet**,
daß ein weiteres abgeschrägtes Gesichtsteil (165) vorgesehen ist, um mit sowohl dem unteren Verschlußteil (102) als auch dem zweiten zusammenpassenden Mittel (122) des untersten Basisteils (101) zusammenzupassen.

14. Modulares Leitungsführungssystem nach einem der Ansprüche 1 bis 13,
in dem ein Netzspannungsversorgungs- oder Datenversorgungssteckdosenausgangsmodul (2) in einem Dienstleerraum aufgenommen ist,
gekennzeichnet durch mechanische Schließverbindungsklammern (20) für das Steckdosenausgangsmodul und ein Abdeckteil (4), das sich über den Verbindungsklammern befindet, um eine optisch durchgängige äußere Oberfläche mit dem Ausgangsmodul zu bilden.

15. Modulares Leitungsführungssystem nach Anspruch 14,
dadurch **gekennzeichnet**,
daß die Basisteile Rückhalteabschnitte aufweisen, die mechanischen Schließverbindungsklammern (20) vorstehende Klammerglieder (26) aufweisen, die in die Rückhalteabschnitte (110) des Basisteils (101) eingreifen und im Inneren mittels Schrauben verriegeln, die mit den Klammergliedern zusammenarbeiten, um die Klammerglieder fest mit den Rückhalteabschnitten in Eingriff zu bringen und dadurch das Steckdosenausgangsmodul in dem System an seinem Platz festhalten.

16. Modulares Leitungsführungssystem nach Anspruch 14 oder 15,
dadurch **gekennzeichnet**,
daß das mindestens eine Basisteil (101) ein abgeschrägtes oberes Abdeckungsprofil enthält um einen Kanal zur Aufnahme von Netz- und Datenverkabelungen für ein Leistensystem zu schaffen.

17. Modulares Leitungsführungssystem nach Anspruch 16,
dadurch **gekennzeichnet**,
daß das Basisteil (101) ein abgeschrägtes oberes Abschlußprofil enthält und daß ein Verlängerungsprofil, das auch als Fach in den Leerräumen genutzt werden kann, an dem unteren Basisteil angeklemmt ist, um einem unteren abgeschrägten Abdeckungsprofil zu ermöglichen, angeklemmt zu werden, um einen Kanal zur Aufnahme von Netz- und Datenverkabelungen für ein Wandschienensystem zu schaffen.

18. Modulares Leitungsführungssystem nach einem der Ansprüche 1 bis 13,
in dem ein Mehrfachsteckdosenausgangsmodul (2) in einen Dienstleerraum (107) eingesetzt ist, wobei das Steckdosenausgangsmodul umfaßt einen Körper (3), wobei Kontakte in dem Körper befestigt sind und ausgelegt sind, mit Leitern, die sich durch den Dienstleerraum erstrecken, verbunden zu werden, eine Abdeckung (4) mit Stiftöffnungen (13) zum Einstecken von Stiften von Steckern (14), um mit den Kontakten in Eingriff zu treten, federnd vorgespannte Verschlußabschnitte (9) mit weiteren Stiftöffnungen (14), und Nockenmittel zur Beaufschlagung der Verschlußabschnitte beim Einstecken eines Steckers, um den Kontakt zugänglich zu machen,
dadurch **gekennzeichnet**,
daß Verbindungsabschnitte (10) mit integral gebildeten Gelenkmitteln (11) die Verschlußabschnitte mit dem Körper verbinden, um in Reaktion auf das Einstecken eines Steckers die Verschlußabschnitte zu bewegen.

19. Modulares Leitungsführungssystem nach Anspruch 18,
dadurch **gekennzeichnet**,
daß die Verbindungsabschnitte (10) an einem Ende ein integrales Gelenk (11), das mit dem entsprechenden Verschlußabschnitt verbunden ist, und an einem gegenüberliegenden Ende ein anderes integrales Gelenk umfassen, das mit dem Körper (3) verbunden ist.

20. Modulares Leitungsführungssystem nach Anspruch 18 oder 19,
dadurch **gekennzeichnet**,
daß die Verbindungen Zuleitungsschienen (7) sind, die sich durch den Körper erstrecken und daß die Kontakte Kontaktklammern (6) sind, die mit den Zuleitungsschienen verbunden sind.

21. Modulares Leitungsführungssystem nach einem der Ansprüche 18 bis 20,
dadurch **gekennzeichnet**,
daß die Verschlußabschnitte (10) für eine Gleitbewegung befestigt sind.

22. Modulares Leitungsführungssystem nach einem der Ansprüche 18 bis 21,
dadurch **gekennzeichnet**,
daß das Nockenmittel Nockenabschnitte umfaßt, die integral mit den Verschlußabschnitten ausgebildet sind.

23. Modulares Leitungsführungssystem nach einem der Ansprüche 1 bis 13,
in dem ein Mehrfachsteckdosenausgangsmodul (2) in einem Dienstleerraum aufgenommen ist, wobei das Ausgangsmodul einen Körper aufweist, durch den sich Zuleitungsschienen erstrecken, auf denen elektrische Kontaktklammern angebracht sind, und eine Abdeckung mit Stiftöffnungen, um zu ermöglichen, daß Stifte von Steckern mit den Kontaktklammern in Eingriff treten können,
dadurch **gekennzeichnet**,
daß Verschlußabschnitte mit weiteren Stiftöffnungen zur Bewegung unter Federvorspannung, die von einem federnden Blattfederabschnitt einer Erdkontaktklammer ausgeübt wird, um den Zugang zu den Klammern zu versperren, und Nockenmittel angebracht sind, um die Verschlußabschnitte beim Einstecken eines Steckers zu beaufschlagen, um die Kontaktklammern zugänglich zu machen.

24. Modulares Leitungszuführungssystem nach Anspruch 23,
dadurch **gekennzeichnet**,
daß der Körper geeignet ausgebildete öffnungsseitige Vertiefungen zur Aufnahme der Zuleitungsschienen (7) aufweist.

25. Modulares Leitungszuführungssystem nach Anspruch 24,
dadurch **gekennzeichnet**,
daß die Zuleitungsschienen die Klammern (6) direkt zur Unterstützung ihrer Lage kontaktieren, wobei die Kontaktklammern auch bewirken, daß der Zuleitungsschiene- und Kontaktklammerzusammenbau zurückgehalten wird.

26. Modulares Leitungsführungssystem nach einem der Ansprüche 22 bis 24,
dadurch **gekennzeichnet**,
daß die Abdeckung (4) Vorsprünge (17) aufweist, die die Zuleitungsschienen im geschlossenen Zustand festlegen.

27. Modulares Leitungszuführungssystem nach einem der Ansprüche 22 bis 26,
dadurch **gekennzeichnet**,
daß es weiter umfaßt mechanische Verschlußverbindungsklammern (20) mit hervorstehenden Klammerabschnitten (26), die mit entsprechenden Rückhalteabschnitten (110) der Basisteile (101) in Eingriff bringbar sind, und Schraubenmittel (24) zur Verriegelung der mechanischen Verschlußklammern im Inneren, um das Modul (2) in dem System zu sichern.

28. Modulares Leitungsführungssystem nach Anspruch 27,
dadurch **gekennzeichnet**,
daß die mechanischen Verschlußverbindungsklammern (20) jeweils U-förmige Klammern (22) enthalten, um die freiliegenden Zuleitungsschienenenden in Reibungseingriff zu halten.

29. Modulares Leitungsführungssystem nach Anspruch 27 oder 28,
dadurch **gekennzeichnet**,
daß die mechanischen Verschlußverbindungsklammern (20) jeweils weitere U-förmige Klammern umfassen, welche jeweils mit Innengewinden versehen sind, um zwei Schrauben (23) aufzunehmen oder zu empfangen, um die Verbindung zwischen einem elektrischen Kabel und den Zuleitungsschienen aufrecht zu erhalten.

30. Modulares Leitungsführungssystem nach einem der Ansprüche 22 bis 29,
dadurch **gekennzeichnet**,
daß eine Mehrzahl von mit den Ende aneinander angeordneten Modulen mittels gesonderter Zuleitungsschienen verbunden ist.

31. Modulares Leitungsführungssystem nach einem der Ansprüche 22 bis 30,
dadurch **gekennzeichnet**,
daß es ferner Abdeckungsklammern (25) zur Abdeckung der mechanischen Verschlußverbindungsklammern (20) umfaßt, um eine optisch durchgängige äußere Oberfläche zu schaffen.

## Revendications

1. Système de câblage modulaire comprenant une pluralité de pièces à emboîtement comprenant au moins une pièce de base (101) et au moins une pièce de couverture (104) pour celle-ci, ladite au moins une pièce de base comportant plusieurs moyens à emboîtement (120, 122, 124) d'un seul tenant pour un emboîtement sélectif avec des moyens à emboîtement complémentaires d'un seul tenant respectivement avec la pièce de couverture et avec une autre pièce de base, ladite au moins une pièce de base présentant une section transversale ouverte pour un accès latéral le long de la pièce de base, ladite au moins une pièce de base présentant une section transversale généralement en forme de L avec un premier jambage postérieur et un second jambage transversal, lesdits plusieurs moyens à emboîtement (120, 122, 124) comprenant un premier moyen à emboîtement (120) à une extrémité libre du premier jambage, un troisième moyen à emboîtement (124) à l'autre extrémité du premier jambage et un deuxième moyen à emboîtement (122) à une extrémité libre du second jambage, les pièces de base respectives étant emboîtables par glissement relatif ou encliquetage et étant dépourvues de raccords pivotants entre elles, de manière qu'une configuration de câblage souhaitée puisse être construite à partir d'une pluralité de modules de pièces de base et de couverture, des espaces pour branchements (107) étant formés entre les pièces de base et de couverture respectives lorsqu'elles sont mutuellement emboîtées et étant délimités par les seconds jambages de pièces de base adjacentes respectives.

2. Système de câblage modulaire selon la revendication 1, caractérisé en ce que le premier moyen à emboîtement (120) est destiné à un emboîtement sélectif avec le troisième moyen à emboîtement d'un seul tenant avec l'autre pièce de base, et le troisième moyen à emboîtement (124) est destiné à un emboîtement sélectif avec le premier moyen à emboîtement d'un seul tenant avec une autre pièce de base adjacente.

3. Système de câblage modulaire selon la revendication 1 ou 2, caractérisé en ce que ledit deuxième moyen à emboîtement (122) comprend deux moyens à emboîtement, chacun de ces moyens à emboîtement étant destiné à un emboîtement sélectif avec des pièces de couverture respectives (104) capables de former des espaces respectifs pour branchements (107) avec lesdites pièces de base respectives (101).

4. Système de câblage modulaire selon l'une quelconque des revendications 1 à 3, caractérisé en ce que le second jambage est plus court que le premier jambage.

5. Système de câblage modulaire selon l'une quelconque des revendications précédentes, caractérisé en ce que les pièces de base (101) une fois assemblées définissent une paroi de base et des jambages faisant saillie vers l'extérieur depuis ladite paroi.

6. Système de câblage modulaire selon l'une quelconque des revendications précédentes, caractérisé en ce que ladite au moins une pièce de couverture (104) comporte des moyens à emboîtement s'emboîtant avec le deuxième moyen à emboîtement (122) sur des pièces de base adjacentes (101).

7. Système de câblage modulaire selon les revendications 5 et 6, lorsqu'elles sont considérées conjointement, caractérisé en ce que les seconds jambages faisant saillie vers l'extérieur en coopération avec les rebords latéraux des pièces de couverture (104) définissent les cloisons entre les espaces pour branchements (107) des modules respectifs.

8. Système de câblage modulaire selon l'une quelconque des revendications précédentes, caractérisé en ce que ladite au moins une pièce de base (101) est une pièce extrudée, le troisième moyen à emboîtement (124) étant situé à la jonction des premier et second jambages.

9. Système de câblage modulaire selon la revendication 8, caractérisé en ce que la pièce de couverture (104) a la forme d'un U et engage le deuxième moyen à emboîtement (122) à la fois de ladite au moins une pièce de base (101) et de l'autre pièce de base adjacente (101).

10. Système de câblage modulaire selon la revendication 9, dans lequel les espaces pour branchements (107) sont disposés les uns au-dessus des autres, caractérisé en ce que le système de câblage comprend en outre une pièce de fermeture (102) pour fermer un espace pour branchements le plus élevé.

11. Système de câblage modulaire selon la revendication 10, caractérisé en ce que la pièce de fermeture (102) s'engage avec le premier moyen à emboîtement (120) d'une pièce de base la plus élevée et un moyen à emboîtement supérieur d'une pièce de couverture la plus élevée.

12. Système de câblage modulaire selon l'une quelconque des revendications 10 et 11, caractérisé en ce que l'extrémité inférieure du système de câblage est fermée par une pièce de fermeture inférieure qui s'engage avec le troisième moyen à emboîtement (124) de la pièce de base la plus basse.

13. Système de câblage modulaire selon la revendication 12, caractérisé en ce qu'une autre pièce à face biseautée (105) est prévue à la fois pour un emboîtement avec la pièce de fermeture inférieure (102) et le deuxième moyen à emboîtement (122) de la pièce de base la plus basse (101).

14. Système de câblage modulaire selon l'une quelconque des revendications 1 à 13, dans lequel un module de sortie de prises d'alimentation électrique sur secteur ou d'alimentation en données (2) est logé dans un espace pour branchements, caractérisé par des attaches de connecteurs à verrouillage mécanique (20) pour le module de sortie de prises et une pièce de couverture (4) située sur les attaches de connecteurs pour obtenir une surface externe continue avec le module de sortie.

15. Système de câblage modulaire selon la revendication 14, caractérisé en ce que les pièces de base comportent des sections de retenue, les attaches de connecteurs (20) à verrouillage mécanique comportent des attaches en projection (26) qui engagent les sections de retenue (110) de la pièce de base (101) et se verrouillent in situ au moyen de vis coopérant avec les attaches pour engager solidement les attaches avec les sections de retenue et donc verrouiller le module de sortie de prises en place dans le système.

16. Système de câblage modulaire selon la revendication 14 ou 15, caractérisé en ce que ladite au moins une pièce de base (101) comprend un profil de couvercle supérieur biseauté pour former un conduit pour loger les câbles d'alimentation en électricité et en données pour un système en forme de plinthe.

17. Système de câblage modulaire selon la revendication 16, caractérisé en ce que la pièce de base (101) comprend un profil de couvercle supérieur biseauté et un profil en extension qui peut également être utilisé comme support au sein des espaces, s'encliquète à la pièce de base inférieure pour permettre à un profil de couvercle inférieur biseauté d'être encliqueté afin de former un conduit pour loger des câbles d'alimentation en électricité et en données pour un système en forme de baguette de bord.

18. Système de câblage modulaire selon l'une quelconque des revendications 1 à 13, dans lequel un module de sortie de prises multiples (2) est inséré dans un espace pour branchements (107), le module de sortie de prises comprenant un corps (3), des contacts montés dans le corps et adaptés à être reliés à des conducteurs s'étendant dans l'espace pour branchements, un couvercle (4) comportant des ouvertures pour fiches (13) pour l'insertion des fiches de prises mâles (14) afin d'engager les contacts, des portions d'obturateurs sollicitées élastiquement (9) comportant d'autres ouvertures pour fiches (14) et des moyens de came pour solliciter les portions d'obturateurs lors de l'insertion de la prise mâle pour un accès aux contacts, caractérisé en ce que des portions de connexion (10) avec des moyens d'articulation d'un seul tenant (11) relient les portions d'obturateurs au corps pour un déplacement des portions d'obturateurs en réponse à l'insertion de la prise mâle.

19. Système de câblage modulaire selon la revendication 18, caractérisé en ce que les portions de connexion (10) comprennent à une extrémité une articulation d'un seul tenant (11) reliée à la portion d'obturateur correspondante et à une extrémité opposée une autre articulation d'un seul tenant reliée au corps (3).

20. Système de câblage modulaire selon la revendication 18 ou 19, caractérisé en ce que les connecteurs sont des barres bus (7) s'étendant à travers le corps et les contacts sont des plots de contact (6) reliés aux barres bus.

21. Système de câblage modulaire selon l'une quelconque des revendications 18 à 20, caractérisé en ce que les portions d'obturateurs (9) sont montées pour un mouvement glissant.

22. Système de câblage modulaire selon l'une quelconque des revendications 18 à 21, caractérisé en ce que lesdits moyens de came comprennent des portions de came d'un seul tenant avec lesdites portions d'obturateurs.

23. Système de câblage modulaire selon l'une quelconque des revendications 1 à 13, dans lequel un module de sortie de prises multiples (2) est logé dans un espace pour branchements, le module de sortie comprenant un corps à travers lequel s'étendent des barres bus sur lesquelles des plots de contact électrique sont reliés, et un couvercle comportant des ouvertures pour fiches pour permettre aux fiches de prises mâles d'engager les plots de contact, caractérisé en ce que des portions d'obturateurs comportant d'autres ouvertures pour fiches sont montées pour un déplacement sous la sollicitation élastique exercée par une portion de ressort à lame élastique d'un plot de contact à la terre de manière à avoir accès aux attaches de barres bus, et des moyens de came sollicitent les portions d'obturateurs lors de l'insertion d'une prise mâle pour un accès aux plots de contact.

24. Système de câblage modulaire selon la revendication 23, caractérisé en ce que le corps comporte des évidements ouverts sur les côtés d'une configuration appropriée pour recevoir les barres bus (7).

25. Système de câblage modulaire selon la revendication 24, caractérisé en ce que les barres bus contactent les plots (6) directement pour faciliter leur positionnement, les plots de contact servant également à maintenir l'assemblage des barres bus et des plots de contact.

26. Système de câblage modulaire selon l'une quelconque des revendications 22 à 24, caractérisé en ce que le couvercle (4) comporte des projections (17) positionnant les barres bus dans une condition fermée.

27. Système de câblage modulaire selon l'une quelconque des revendications 22 à 26, caractérisé en ce qu'il comprend en outre des attaches de connecteurs (20) à verrouillage mécanique comportant des portions d'attaches (26) pouvant être engagées avec les sections de retenue correspondantes (110) des pièces de base (101), et des moyens de vis (24) pour assujettir les attaches à verrouillage mécanique in situ afin de fixer le module (2) dans le système.

28. Système de câblage modulaire selon la revendication 27, caractérisé en ce que les attaches de connecteurs (20) à verrouillage mécanique comprennent chacune des attaches en U (22) pour engager par frottement les extrémités des barres bus exposées.

29. Système de câblage modulaire selon la revendication 27 ou 28, caractérisé en ce que les attaches de connecteurs (20) à verrouillage mécanique comprennent chacune d'autres attaches en U qui sont chacune filetées pour loger ou recevoir deux vis (23) afin de maintenir la connexion entre un câble électrique et les barres bus.

30. Système de câblage modulaire selon l'une quelconque des revendications 22 à 29, caractérisé en ce qu'une pluralité des modules disposés bout à bout sont reliés au moyen de barres bus distinctes.

31. Système de câblage modulaire selon l'une quelconque des revendications 22 à 30, caractérisé en ce qu'il comprend en outre des attaches de couvercle (25) pour recouvrir les attaches de connecteurs (20) à verrouillage mécanique afin d'obtenir une surface externe d'aspect continu.
